# EUROPEAN PATENT SPECIFICATION

(11) **EP 0 256 657 B1**
(45) Date of publication and mention of the grant of the patent: **21.09.1994**
(21) Application number: 87306050.3
(22) Date of filing: 08.07.1987
(51) Int. Cl.: G01F 15/075, B67D 5/08, G01F 15/06

(54) **Apparatus for metering the flow of a liquid**
Gerät zur Flüssigkeitsdurchflussmessung
Appareil pour la mesure d'un débit de liquide

(30) Priority: 08.07.1986 GB 8616601
(43) Date of publication of application: 24.02.1988
(73) Proprietor: Pektron Ltd., Derby DE2 4AP (GB)
(72) Inventor: Morgan, Phillip, Derby, DE2 4AP (GB)
(74) Representative: Drever, Ronald Fergus

(56) References cited:
- EP-A- 0 099 712
- EP-A- 0 199 051
- US-A- 3 806 904
- US-A- 4 132 981

## Description

This invention relates to apparatus for metering the flow of a fluid and is particularly concerned with the volumetric metering of beer.

In premises where beer is dispensed, for stock control and other purposes, there is a requirement for a system which will meter the quantity of liquid dispensed. One method and apparatus for improving overall accuracy of a metering arrangement while enabling the use of conventional equipment such as flow meters is described in our U.K. Patent Specification No. 2084546. It is however also important to prevent unauthorised tampering with metering apparatus as otherwise accurate metering is of no consequence.

Systems have previously been proposed for remotely reading measurements made by a meter, whereby to ensure that only an authorised person can access the metered information. Such arrangements have to date been utilised in the metering of utilities such as the flow of water, gas or electricity, as exemplified by U.S. Patent Specifications Nos. 3806904 and 4132981 each disclosing an apparatus having the features set out in the first part of claim 1. When metering the flow of beer, problems can arise which are not to be found with facilities in that the supply of beer is not continuous and when the supply runs out, gas can enter the systems and can lead to metering errors.

According to the present invention there is provided apparatus for metering the flow of a liquid, said apparatus comprising metering means adapted to provide signals representative of the flow of predetermined volumes of the liquid past a metering position, means for recording the signals for totalising, and means for accessing information from the recording means, the accessing means being adapted for releasable connection with the recording means, whereby information is accessed only when connection is selectively made, characterised in that, said metering means is a flow meter of the type having a flow turbine, sensing means in the form of a microprocessor is provided for sensing whether the turbine of the flow meter is revolving at a speed which corresponds to a dispense speed of faster than a predetermined level due to gas inadvertently entering the liquid in the dispense line, the microprocessor being operatively connected with the recording means whereby to inhibit operation of the latter in case said revolving speed exceeds said predetermined level thus preventing metering errors arising.

Preferably the recording means has an output socket in electrical connection with circuitry therein providing for the recording of the signals, the output socket being remotely connected by electrical line means to the metering means, and the accessing means comprises an electrical plug which can releasably connect in the output socket of the recording means to provide electrical connection between the circuitry for recording the signals in the latter and circuitry in the accessing means providing for information read-out. The circuitry of the recording means may include a permanent nonresettable memory of predetermined capacity and an independent resettable memory for recording signals representative of the flow following previous clearance of the resettable memory.

Preferably also the recording means is battery operated and has a first fully operational condition and a second condition wherein reduced power is consumed, the recording means automatically switching from the first condition to the second condition during inactive periods.

An embodiment of the present invention will now be described by way of example only, with reference to the accompanying drawings, in which :-
Fig. 1 is a perspective view of flow recording equipment forming part of an apparatus according to the invention; and
Fig. 2 is a perspective view of information accessing equipment forming part of the invention.

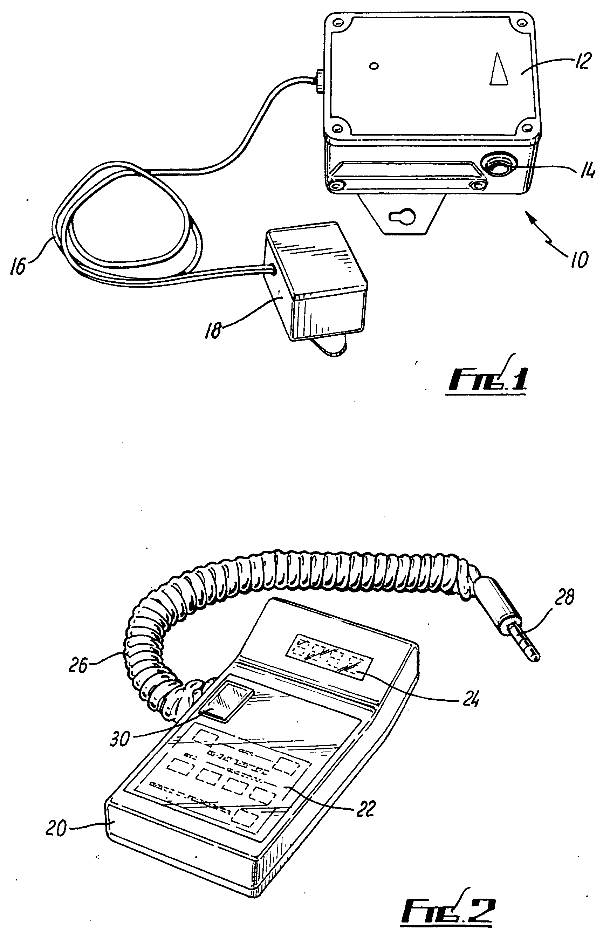

Referring to the drawings, a device 10 for recording the flow of beer in a dispense line has a substantially rectangular casing 12 having a through passage for flow of beer, with in-line connectors 14 for insertion in the dispense line between the pumped supply and the dispensing head.

The recording device 10 includes a flow meter (not shown) in the beer line which is adapted to emit a pulse each time a predetermined volume of beer passes therethrough. The pulses are registered, compared, varied in number, and subsequently recorded in accordance with the method described in our prior U.K. Patent No. 2084546 entitled "Method and Apparatus for Metering the Flow of a Fluid".

The electrical circuitry of the recording device 10 is microprocessor-based and includes a permanent non-settable memory with a capacity of 45450 litres (9999 gallons), as well as fully independent re-settable memory for recording the amount of beer dispensed since the prev-ious time the resettable memory was cleared. The recording device has no display and both memories are totally secure. The device 10 is provided with an electrical lead 16 connected in a casing 18 to a jack socket, the latter being electrically connected with the memory circuits.

There is further provided an information accessing or interrogator device 20 of a shape and size enabling holding by the hand. The device 20 is fully portable and is battery powered incorporating a splash-proof membrane keypad 22 and a liquid crystal display 24. The device 20 has an electrical lead 26 presenting a jack plug 28. The latter is adapted to plug into the jack socket of the recording device 10 to thus provide selective electrical communication between the memory circuits of the latter and electrical circuitry in the device 20 enabling readout from the latter.

When the interrogator device 20 is plugged into the recording device 10, pressing of the appropriate key on the keypad 22 displays required information on the display 24. The read-out is in litres (gallons) for the permanent memory and 0.28 litres (half pints) for the re-settable memory. In the case of the latter the read-out can be converted to pints or gallons by pressing a relevant conversion key. The resettable memory can also be cleared from the interrogator device 20 by pressing twin re-set keys. The interrogator device 20 includes a battery power indicator 30 to show that the supply is healthy.

The recording device is also battery powered. To consume minimum power, the circuitry of the recording device 10 is arranged to switch the device from a fully operational first mode into a second mode during inactive periods so that very little power is consumed. When flow starts the recording device 10 automatically becomes fully operational but after a predetermined period during which no dispense is recorded the recording device 10 can automatically return to the other mode. Should the batteries which power the recording device 10 become low, then, when the user subsequently tries to read the memories by means of the interrogator device 20, the latter will automatically sense that the power supply within the recording device 10 is low and will, instead of constantly displaying the normal readout, alternate between "BATT" and the readout to make the user aware of the fact that the batteries need changing. If re-chargeable batteries are provided, a jack socket (not shown) is located on a side of the device 10 to allow charging.

In use the recording device 10 is installed in the dispense line preferably close to the dispensing head and the casing 18 can be conveniently mounted on the underside of the bar. The device 10 provides a totally secure and accurate metering arrangement, the only way of accessing the metering information being by means of the interrogator device 20. The latter can be permanently in the possession of an authorised person and can conveniently be carried by that person at all times. Plugging of the interrogator device 20 into the recording device 10 allows reading of both the permanent and re-settable memories and the interrogator device 20 can be plugged into any number of recording devices 10. Accordingly only one interrogator device 20 may be required per establishment, regardless of the number of recording devices 10 in use.

If the microprocessor of the recording device 10 senses that the flow turbine of the flow meter is revolving at a speed which corresponds to a dispense speed of faster than a predetermined level, then the impulses from the turbine are ignored. In this way, should any gas enter the system, such as when a keg runs out, the turbine will rotate very quickly and the recording device 10 will not count. Hence errors due to CO₂ are eliminated.

Various modifications may be made without departing from the scope of the invention as defined by the appended claims. For example the recording device may be mains operated as an alternative to being battery powered.

## Claims

1. Apparatus for metering the flow of a liquid, said apparatus comprising metering means adapted to provide signals representative of the flow of predetermined volumes of the liquid past a metering position, means (10) for recording the signals for totalising, and means (20) for accessing information from the recording means, the accessing means (20) being adapted for releasable connection with the recording means (10), whereby information is accessed only when connection is selectively made, characterised in that, said metering means is a flow meter of the type having a flow turbine, sensing means in the form of a microprocessor is provided for sensing whether the turbine of the flow meter is revolving at a speed which corresponds to a dispense speed of faster than a predetermined level due to gas inadvertently entering the liquid in the dispense line, the microprocessor being operatively connected with the recording means (10) whereby to inhibit operation of the latter in case said revolving speed exceeds said predetermined level thus preventing metering errors arising.

2. Apparatus according to claim 1, characterised in that the recording means (10) has an output socket (18) in electrical connection with circuitry therein providing for the recording of the signals, the output socket (18) being remotely connected by electrical line means to the metering means, and the accessing means (20) comprises an electrical plug (28) which can releasably connect in the output socket (18) of the recording means (10) to provide electrical connection between the circuitry for recording the signals in the latter and circuitry in the accessing means (20) providing for information read-out.

3. Apparatus according to claim 2, characterised in that the circuitry of the recording means (10) includes a permanent non-resettable memory of predetermined capacity and an independent resettable memory for recording signals representative of the flow following previous clearance of the resettable memory.

4. Apparatus according to any of the preceding claims, characterised in that the recording means (10) is battery operated and has a first fully operational condition and a second condition wherein reduced power is consumed, the recording means (10) automatically switching from the first condition to the second condition during inactive periods.

5. A liquid dispense arrangement comprising a liquid line extending between a liquid supply and liquid dispensing means, and apparatus according to any of the preceding claims having the metering means connected in the liquid line.

## Patentansprüche

1. Gerät zur Flüssigkeitsdurchflußmessung, mit Meßmitteln zum Bereitstellen von Signalen, die für den Durchfluß vorbestimmter Volumina der Flüssigkeit an einer Meßposition vorbei repräsentativ sind, Mitteln (10) zum Aufzeichnen der Signale zum Totalisieren und Mitteln (20) für den Informationszugriff aus den Aufzeichnungsmitteln, wobei die Zugriffsmittel (20) lösbar mit den Aufzeichnungsmitteln (10) verbindbar sind, wodurch eine Information nur bei selektiv hergestellter Verbindung erhalten wird, dadurch gekennzeichnet, daß die Meßmittel ein Durchflußmesser des eine Durchflußturbine aufweisenden Typs sind, daß Sensormittel in Gestalt eines Mikroprozessors zum Sensieren vorgesehen sind, ob die Turbine des Flußmessers mit einer Geschwindigkeit dreht, die einer Abgabegeschwindigkeit entspricht, die aufgrund von unabsichtlich in die Flüssigkeit in der Abgabeleitung gelangendem Gas größer als ein vorbestimmter Wert ist, und daß der Mikroprozessor wirksam mit den Aufzeichnungsmitteln (10) verbunden ist, wodurch ein Betrieb der letzteren in dem Falle unterbunden wird, daß die Drehgeschwindigkeit den vorbestimmten Wert übersteigt, so daß das Entstehen von Meßfehlern vermieden wird.

2. Gerät nach Anspruch 1, dadurch gekennzeichnet, daß die Aufzeichnungsmittel (10) eine Ausgangsbuchse (18) aufweisen, die in elektrischer Verbindung mit dem darin zum Aufzeichnen der Signale vorgesehenen Schaltkreis steht, wobei die Ausgangsbuchse (18) mit Entfernung durch elektrische Leitungsmittel mit den Meßmitteln verbunden ist, und die Zugriffsmittel (20) einen elektrischen Stecker (28) enthalten, der lösbar mit der Ausgangsbuchse (18) der Aufzeichnungsmittel (10) verbindbar ist, um eine elektrische Verbindung zwischen dem Schaltkreis zur Signalaufzeichnung in letzteren und dem Schaltkreis in den Zugriffsmitteln (20) herzustellen, so daß eine Information ausgelesen werden kann.

3. Gerät nach Anspruch 2, dadurch gekennzeichnet, daß der Schaltkreis der Aufzeichnungsmittel (10) einen permanenten, nicht rücksetzbaren Speicher vorbestimmter Kapazität und einen unabhängigen rücksetzbaren Speicher zum Aufzeichnen von Signalen enthält, die für den Durchfluß repräsentativ sind, der auf eine vorherige Löschung des rücksetzbaren Speichers folgt.

4. Gerät nach einem der vorstehenden Ansprüche, dadurch gekennzeichnet, daß die Aufzeichnungsmittel (10) mit Batterie betrieben sind und einen ersten voll wirksamen Zustand und einen zweiten Zustand mit reduziertem Energieverbrauch aufweisen, wobei die Aufzeichnungsmittel (10) während inaktiver Perioden automatisch vom ersten Zustand auf den zweiten Zustand umschalten.

5. Flüssigkeitsabgabeanordnung mit einer Flüssigkeitsleitung, die zwischen einem Flüssigkeitsvorrat und Flüssigkeitsabgabemitteln verläuft und einem Gerät nach einem der vorstehenden Ansprüche, wobei die Meßmittel in die Flüssigkeitsleitung geschaltet sind.

## Revendications

1. Appareil pour mesurer le débit d'un liquide, ledit appareil comprenant des moyens de mesure adaptés pour fournir des signaux représentatifs du débit de volumes prédéterminés du liquide au-delà d'une position de mesure, des moyens (10) pour enregistrer les signaux en vue d'une totalisation, et des moyens (20) pour accéder aux informations depuis les moyens d'enregistrement, les moyens d'accès (20) étant adaptés pour se connecter, de manière à pouvoir se dégager, aux moyens d'enregistrement (10), l'accès aux informations n'étant rendu possible que lorsque la connection est assurée de manière sélective, caractérisé en ce que, ledit moyen de mesure est un débitmètre du type présentant une turbine de débit, le moyen de détection sous forme d'un microprocesseur est prévu pour détecter si la turbine du débitmètre tourne à une vitesse qui correspond à une vitesse de distribution supérieure à un niveau prédéterminé du fait de la pénétration intempestive du gaz dans le liquide de la ligne de distribution, le microprocesseur étant connecté, de manière opérationnelle, au moyen d'enregistrement (10) pour bloquer le fonctionnement de ce dernier au cas où ladite vitesse de rotation serait supérieure audit niveau prédéterminé, évitant ainsi toute erreur de mesure.

2. Appareil selon la revendication 1, caractérisé en ce que le moyen d'enregistrement (10) comporte une prise de sortie (18) connectée électriquement au circuit assurant ainsi l'enregistrement des signaux, la prise de sortie (18) étant connectée à distance par des moyens formant lignes électriques au moyen de mesure, et le moyen d'accès (20) comprend une prise électrique (28) qui peut se connecter, de manière à pouvoir se dégager, dans la prise de sortie (18) du moyen d'enregistrement (10) pour assurer un raccordement électrique entre le circuit pour enregistrer les signaux dans ce dernier et le circuit dans le moyen d'accès (20) assurant la lecture des informations.

3. Appareil selon la revendication 2, caractérisé en ce que le circuit du moyen d'enregistrement (10) comprend une mémoire permanente sans remise à zéro à capacité prédéterminée et une mémoire indépendante à remise à zéro pour enregistrer les signaux représentatifs du débit après l'effacement précédent de la mémoire à remise à zéro.

4. Appareil selon l'une quelconque des revendications précédentes, caractérisé en ce que le moyen d'enregistrement (10) fonctionne avec une batterie et présente un premier état totalement opérationnel et un deuxième état dans lequel une énergie réduite est consommée, le moyen d'enregistrement (10) passant automatiquement du premier état au deuxième état pendant des périodes inactives.

5. Dispositif de distribution de liquide comprenant une conduite de liquide s'étendant entre un moyen d'alimentation en liquide et un moyen de distribution de liquide, et appareil selon l'une quelconque des revendications précédentes dans lequel le moyen de mesure est connecté dans la conduite de liquide.
